# EUROPÄISCHE PATENTANMELDUNG

(11) **EP 1 253 767 A2**
(43) Veröffentlichungstag der Anmeldung: **30.10.2002**
(21) Anmeldenummer: 02009610.3
(22) Anmeldetag: 26.04.2002
(51) Int. Cl.: H04M 1/247, H04M 3/42

(54) **Telefonendgerät, Vermittlungsanlage und Verfahren zum Bereitstellen einer Hilfefunktion**

(30) Priorität: 28.04.2001 DE 10121009
(71) Anmelder: Tenovis GmbH & Co. KG, 60362 Frankfurt am Main (DE)
(72) Erfinder: Wörmann, Michael, 65795 Hattersheim (DE)
(74) Vertreter: Patentanwaltskanzlei WILHELM & BECK

(57) **Zusammenfassung**

Es wird ein Telefonendgerät, eine Telefonanlage und ein Verfahren zum Bereitstellen einer Hilfefunktion beschrieben, bei der eine Hilfefunktion von einem Telefonendgerät aus aufgerufen werden kann, deren Hilfeinformationen in der Telefonanlage abgelegt sind. Vorzugsweise können die Hilfeinformationen der Hilfefunktion zusätzlich durch Eingaben am Telefonendgerät erweitert werden.

## Beschreibung

Die Erfindung betrifft ein Telefonendgerät gemäß dem Oberbegriff des Patentanspruchs 1, eine Telefonanlage gemäß dem Oberbegriff des Patentanspruchs 11 und ein Verfahren zum Bereitstellen einer Hilfefunktion gemäß dem Oberbegriff des Patentanspruchs 17.

Telekommunikationssysteme mit einer Telefonanlage und einem Telefonendgerät sind in den verschiedensten Ausführungsformen bekannt. Moderne Telefonendgeräte bieten dem Benutzer eine Fülle verschiedener Leistungsmerkmale. Dabei wird auf einer Anzeige eine Bedienoberfläche bereitgestellt, die vorzugsweise in Form einer menüartigen Benutzerführung die Nutzung aller Leistungsmerkmale ermöglicht. Insbesondere bei Telefonendgeräten, die eine Vielzahl von verschiedenen Funktionen bereitstellen, ist es für einen Benutzer oftmals nicht einfach, alle Funktionen auszunutzen, da dem Benutzer beispielsweise Spezialbegriffe nicht bekannt sind oder die Menüführung unübersichtlich ist. Erklärungen zur Benutzung des Telefonendgerätes sind üblicherweise in einem Handbuch oder einer Bedienungsanleitung aufgeführt.

Gedruckte Bedienungsanleitungen haben den Nachteil, dass die Bedienungsanleitung für den Benutzer im entscheidenden Moment nicht greifbar ist. Auch für den Hersteller haben gedruckte Bedienungsanleitungen den Nachteil, dass nachträgliche Änderungen nicht mehr berücksichtigt werden können.

Die Aufgabe der Erfindung besteht darin, einen Benutzer eines Telefonendgerätes bei der Benutzung des Telefonendgerätes zu unterstützen.

Die Aufgabe der Erfindung wird durch das Telefonendgerät gemäß dem Anspruch 1, durch die Telefonanlage gemäß dem Anspruch 11 und das Verfahren zum Bereitstellen einer Hilfefunktion gemäß dem Anspruch 17 gelöst.

Das Telefonendgerät gemäß Anspruch 1 weist den Vorteil auf, dass Daten einer Hilfefunktion über eine Schnittstelle empfangen werden und auf der Anzeige des Telefonendgerätes dargestellt werden. Damit ist es möglich, eine dezentrale Hilfefunktion einzurichten, die jederzeit für eine Vielzahl von Telefonendgeräten einsetzbar ist. Somit kann eine Änderung der Hilfefunktion unabhängig von dem Telefonendgerät beispielsweise in einer Telefonanlage durchgeführt werden. Dies erlaubt eine einfache und kostengünstige Anpassung der Hilfefunktion an Weiterentwicklungen des Telefonendgerätes.

Die Telefonanlage gemäß Anspruch 11 weist den Vorteil auf, dass die Telefonanlage eine Hilfefunktion bereithält, die über eine Schnittstelle von einem Telefonendgerät genutzt werden kann. Beispielsweise können für eine Vielzahl von unterschiedlichen Telefonendgeräten unterschiedliche Versionen der Hilfsfunktion in der Telefonanlage bereitgehalten werden und je nach Art des Telefonendgerätes wird bei Anfrage einer Unterstützung durch die Hilfsfunktion eine entsprechende Variante der Hilfsfunktion in der Telefonanlage aktiviert. Somit können zentral für verschiedene Ausführungsformen der Telefonendgeräte Hilfsfunktionen bereitgehalten werden.

Das erfindungsgemäße Verfahren nach Anspruch 17 weist den Vorteil auf, dass die Hilfsfunktion durch individuelle Eingaben ergänzt werden kann. Somit ist eine Anpassung der Hilfsfunktion an das Bedürfnis eines individuellen Benutzers möglich. Diese Funktion führt zu einer angenehmeren Handhabung des Telefonendgerätes.

Weitere vorteilhafte Ausführungsformen der Erfindung sind in den abhängigen Ansprüchen angegeben.

Vorzugsweise weist das Telefonendgerät ein Eingabemittel auf, mit dem Ergänzungsdaten für die Hilfefunktion eingegeben werden können. Somit kann über eine direkte Eingabe am Telefonendgerät die von einer Hilfefunktion zur Verfügung gestellten Informationen erweitert und/oder verändert werden. Damit ist eine individuelle Anpassung der Hilfefunktion möglich.

In einer bevorzugten Ausführungsform der Erfindung werden die Ergänzungsdaten in Relation zu einer Information oder einer Auswahlklasse der Hilfefunktion abgespeichert. Bei einer erneuten Darstellung der zugeordneten Information oder der zugeordneten Auswahlklasse werden auch die Ergänzungsdaten auf der Anzeige dargestellt. Somit ist eine Einbindung der Ergänzungsdaten sowohl in inhaltlicher Hinsicht als auch in funktioneller Hinsicht möglich. Damit wird der Komfort bei der Benutzung des Telefonendgerätes erhöht.

Eine besonders einfache Nutzung der Hilfefunktion wird dadurch ermöglicht, dass das Telefonendgerät eine Hilfetaste aufweist, nach deren Betätigung eine Hilfeinformation über die Schnittstelle des Telefonendgerätes abgefragt wird. Vorzugsweise ist die Hilfetaste zum schnelleren Auffinden optisch hervorgehoben.

In einer weiteren bevorzugten Ausführungsform stellt die Hilfefunktion eine Stichwortsuche in Hilfeinformationen bereit. Mit Hilfe der Stichwortsuche kann schnell die für den Benutzer des Telefonendgerätes interessierende Hilfeinformation gefunden und dargestellt werden. Für eine besonders einfache Bedienung des Telefonendgerätes ist es vorteilhaft, bei Erkennen einer Fehlbedienung des Telefonendgerätes automatisch eine Hilfefunktion auf der Anzeige des Telefonendgerätes anzubieten. Vorzugsweise wird die zur Fehlbedienung passende Hilfeinformation auf der Anzeige dargestellt.

Eine schnelle und einfache Bedienung der Hilfefunktion wird dadurch erreicht, dass die von der Hilfefunktion zur Verfügung gestellten Hilfeinformationen in Auswahlklassen unterteilt sind. Die Auswahlklassen können dabei nach dem Inhalt oder vorzugsweise nach der Häufigkeit der bei der Bedienung des Telefonendgerätes benutzten Funktionen oder der Häufigkeit der auftretenden Fehler unterteilt sein. Vorzugsweise wird zu den Funktionen, die bei der Benutzung des Telefonendgerätes am meisten benutzt werden, die Hilfeinformationen in einer ersten Auswahlklasse angeboten. Die Hilfeinformationen, die zu Funktionen des Telefonendgerätes gehören, die seltener benutzt werden, werden in einer zweiten Auswahlklasse angeboten. Entsprechend kann auch eine Unterteilung in Auswahlklassen nach der Fehlerhäufigkeit bei der Bedienung der Funktionen vorgenommen werden. Als erste Auswahlklasse werden die Hilfeinformationen der Funktionen angezeigt, bei deren Benutzung am häufigsten Fehler auftreten.

In einer bevorzugten Ausführungsform der Telefonanlage ist in dem Speicher der Telefonanlage ein freier Speicherplatz vorhanden, der über die Schnittstelle von dem Telefonendgerät mit Ergänzungsdaten zu Hilfeinformationen der Hilfefunktion beschrieben werden kann. Auf diese Weise kann nachträglich ein Kommentar oder eine eigene Hilfeinformation in den Speicher der Telefonanlage eingeschrieben werden. Vorzugsweise werden die Ergänzungsdaten in Relation zu einer Hilfeinformation oder in Relation zu einer Auswahlklasse im Speicher der Telefonanlage abgelegt.

Werden von dem Telefonendgerät Hilfeinformationen angefordert, so werden die Ergänzungsdaten zusammen mit den Hilfeinformationen von der Telefonanlage an das Telefonendgerät übertragen, so dass die Ergänzungsdaten zusammen mit den Hilfeinformationen auf der Anzeige des Telefonendgerätes darstellbar sind. Vorzugsweise werden auch die Ergänzungsdaten in die Auswahlklasse eingefügt, denen die Hilfeinformationen zugeordnet sind, zu denen die Ergängzungsdaten gehören.

Die Hilfeinformation weist beispielsweise eine Bedienungsanleitung für das Telefonendgerät und/oder eine Übersicht über die verschiedenen Leistungsmerkmale des Telefonendgerätes auf.

Der Bedienungskomfort für die Handhabung der Hilfefunktion wird vorzugsweise dadurch erhöht, dass die Telefonanlage ein Suchprogramm aufweist, mit dem eine Stichwortsuche in der Hilfeinformation möglich ist.

Eine weitere Verbesserung der Bedienbarkeit der Hilfefunktion wird durch die Verwendung von Querverweisen ermöglicht. Vorzugsweise wird über eine Aktivierung eines Querverweises die zum Querverweis gehörende Hilfeinformation bereitgestellt, so dass die zum Querverweis gehörende Hilfeinformation nach einer Aktivierung des Querverweises auf der Anzeige des Telefonendgerätes darstellbar ist.

Das erfindungsgemäße Verfahren gemäß Anspruch 17 weist in einer bevorzugten Ausführungsform die Funktion auf, dass die Ergänzungsdaten entsprechend den Hilfeinformationen verwendet werden. Auf diese Weise ist sichergestellt, dass die Ergänzungsdaten in die Handhabung und Bereitstellung der Hilfeinformationen eingebunden werden.

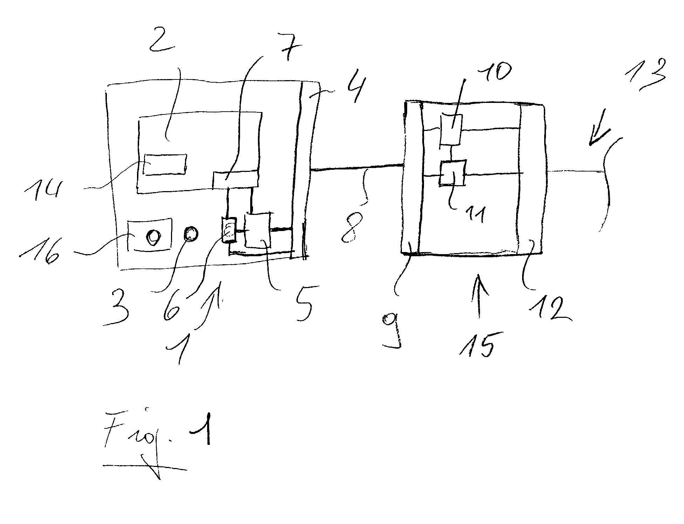

Die Erfindung wird im Folgenden anhand der Figur näher erläutert.

Die Figur zeigt eine schematische Anordnung einer Telekommunikationsanlage mit einer Telefonanlage 15, die über eine Datenleitung 8 mit einem Telefonendgerät 1 verbunden ist. Anstelle des Telefonendgerätes 1 kann jede Art von Telekommunikationsendgerät angeordnet sein. Die Erfindung ist nicht auf die Anwendung von Telefonendgeräten beschränkt, sondern auf jede Art von Telekommunikationsendgerät anwendbar.

Das Telefonendgerät 1 weist eine erste Schnittstelle 4 auf, die mit der Datenleitung 8 verbunden ist. Die erste Schnittstelle 4 steht über Datenleitungen mit einer ersten Recheneinheit 5 und einem ersten Speicher 6 in Verbindung. Die erste Recheneinheit 5 ist zudem direkt mit dem ersten Speicher 6 verbunden. Weiterhin stehen der erste Speicher 6 und die erste Recheneinheit 5 mit einer Anzeigesteuerung 7 in Verbindung, die einer Anzeige 2 zugeordnet ist. Die Anzeigesteuerung 7 steuert die Darstellungen auf der Anzeige 2. Die Anzeige 2 ist beispielsweise als LCD-Display ausgebildet. Je nach Ausführungsform der Erfindung ist auf der Anzeige 2 ein Eingabefeld 14 angeordnet, über das Daten und/oder Informationen über die Bedienung einer Tastatur 16 eingebbar sind. Die Tastatur 16 ist ebenfalls am Telefonendgerät 1 ausgebildet. Das Telefonendgerät 1 weist weiterhin eine Hilfetaste 3 auf. Die Hilfetaste 3 ist über eine Steuerleitung an die erste Recheneinheit 5 angeschlossen.

Die Telefonanlage 15 stellt eine Vermittlungsanlage dar, mit der das Telefonendgerät 1 mit einem gewünschten Telefonteilnehmer verbunden wird. Die Telefonanlage 15 weist eine zweite Schnittstelle 9 auf, die an die Datenleitung 8 angeschlossen ist. Die zweite Schnittstelle 9 ist an eine zweite Recheneinheit 10 und einen zweiten Speicher 11 angeschlossen, die wiederum miteinander in Verbindung stehen. Die zweite Recheneinheit 10 und der zweite Speicher 11 sind zudem an eine dritte Schnittstelle 12 angeschlossen. Die dritte Schnittstelle 12 steht über eine Ausgangsleitung mit dem öffentlichen Datennetz 13 in Verbindung. Das Datennetz 13 stellt beispielsweise das öffentliche Telefonnetz oder das Internet dar.

Die Funktionsweise der Telekommunikationsanlage der Figur wird im Folgenden näher erläutert: Ein Benutzer betätigt zum Aufbau einer Telefonverbindung in bekannter Weise die Tastatur 16, die mit der ersten Recheneinheit 5 verbunden ist. Nach Eingabe einer Telefonnummer eines gewünschten Telefonteilnehmers gibt die erste Recheneinheit 5 einen entsprechenden Verbindungswunsch über die erste Schnittstelle 4 und die Datenleitung 8 an die zweite Schnittstelle 9 der Telefonanlage 15. Der Verbindungswunsch wird an die zweite Recheneinheit 10 weitergeleitet, die daraufhin eine Telefonverbindung über die dritte Schnittstelle 12 und das öffentliche Datennetz 13 mit dem gewünschten Telefonteilnehmer aufbaut. Insoweit funktioniert die Telekommunikationsanlage entsprechend den bekannten Telekommunikationsanlagen.

Hat nun ein Benutzer des Telefonendgerätes 1 Schwierigkeiten bei der Bedienung des Telefonendgerätes 1 oder wünscht der Benutzer weitere Informationen beispielsweise über die Leistungsmerkmale und die Bedienung des Telefonendgerätes 1, so betätigt der Benutzer die Hilfetaste 3.

Die Betätigung der Hilfetaste 3 führt zu einem Steuersignal, das der ersten Recheneinheit 5 zugeführt wird. Die erste Recheneinheit 5 gibt ein Anfragesignal zum Bereitstellen einer Hilfefunktion über die erste Schnittstelle 4, die Datenleitung 8 und die zweite Schnittstelle 9 an die zweite Recheneinheit 10 der Telefonanlage 15. Die zweite Recheneinheit 10 ruft nach Erhalt des Anfragesignals ein Programm zum Bereitstellen der Hilfefunktion auf, das im zweiten Speicher 11 abgelegt ist. Nach Aufruf des Hilfeprogramms durch die zweite Recheneinheit 10 werden die vom Hilfeprogramm bereitgestellten Hilfefunktionen über die zweite Schnittstelle 9, die Datenleitung 8 und die erste Schnittstelle 4 an die erste Recheneinheit 5 übertragen.

Die erste Recheneinheit 5 gibt die von der Hilfefunktion bereitgestellten Daten an die Anzeigesteuerung 7 weiter. Die Anzeigesteuerung 7 stellt die Daten der Hilfefunktion, die vorzugsweise Hilfeinformationen darstellen, auf der Anzeige 2 dar. Die Hilfeinformationen stellen beispielsweise eine Bedienungsanleitung oder eine Erklärung der Leistungsmerkmale dar, die von dem Telefonendgerät 1 bereitgestellt werden. Je nach Ausführungsform werden die Hilfeinformationen in Form einer Menüführung auf der Anzeige 2 angezeigt. Vorzugsweise werden Tasten der Tastatur 16 mit Richtungsfunktionen belegt und es wird eine Art Cursor auf der Anzeige 2 angezeigt. Über die Richtungspfeile kann der Cursor in verschiedenen Bereichen des Menüs bewegt werden und durch eine Aktivierung ein entsprechendes Untermenü aufgerufen werden. Eine Aktivierung wird beispielsweise durch ein Drücken einer festgelegten Taste der Tastatur 16 ausgelöst.

Die von der Hilfefunktion auf der Anzeige 2 angebotenen Funktionen umfassen vorzugsweise eine Stichwortsuche, Querverweise, eine Merkmalsbeschreibung und die Eingabe für persönliche Anmerkungen.

Bei der Funktion Stichwortsuche kann durch Eingabe eines Stichwortes und eine entsprechende Aktivierung in der Hilfeinformation der Telefonanlage 15 nach entsprechenden Stichworten gesucht werden. Zur Eingabe des Stichwortes erscheint vorzugsweise ein Eingabefeld 14 auf der Anzeige 2, in dem das Stichwort einzugeben ist. Dabei wird das Stichwort über die Tastatur 16 eingegeben und beispielsweise nach Drücken der Rautetaste von der ersten Recheneinheit 5 an die zweite Recheneinheit 10 übertragen. Die zweite Recheneinheit 10 sucht nach dem eingegebenen Stichwort in der Hilfeinformation, die beispielsweise im zweiten Speicher 11 abgelegt ist. Wird das Stichwort in der Hilfeinformation gefunden, so überträgt die zweite Recheneinheit 10 den entsprechenden Abschnitt, in dem sich das Stichwort befindet, über die Datenleitung 8 an das Telefonendgerät 1. Der entsprechende Abschnitt wird vom ersten Steuergerät 5 und der Anzeigesteuerung 7 auf der Anzeige 2 dargestellt.

Werden Hilfeinformationen auf der Anzeige 2 dargestellt, so weisen die Hilfeinformationen vorzugsweise Querverweise zu anderen Abschnitten der Hilfeinformation auf. Die Querverweise können mittels eines Cursors gekennzeichnet und durch Betätigung der Rautetaste aktiviert werden. Nach Aktivierung des Querverweises wird der Querverweis an die erste Recheneinheit 5 übertragen. Die erste Recheneinheit 5 gibt über die Datenleitung 8 ein Suchsignal und den Querverweis an die zweite Recheneinheit 10. Die zweite Recheneinheit 10 sucht daraufhin den Text der Hilfeinformation, auf den der Querverweis zeigt. Die Hilfeinformation ist im zweiten Speicher 11 abgelegt. Nach Finden der Hilfeinformation, auf die der Querverweis verweist, wird die entsprechende Hilfeinformation von der zweiten Recheneinheit 10 über die Datenleitung 8 an die erste Recheneinheit 5 übertragen. Die erste Recheneinheit 5 zeigt die Hilfeinformation über die Anzeigesteuerung 7 auf der Anzeige 2 an. Somit ist ein einfaches Aufsuchen und Finden von Querverweisen mit Hilfe des Telefonendgerätes 1 möglich.

Ein wichtiger Inhalt der Hilfeinformation besteht in der Merkmalsbeschreibung der Leistungsmerkmale des Telefonendgerätes 1 und der Leistungsmerkmale der Telefonanlage 15. Beispielsweise werden die von der Telefonanlage 15 bereitgestellten Zusatzfunktionen in Form eines Textes nach einem entsprechenden Aufruf der Hilfefunktion auf der Anzeige 2 dargestellt.

Möchte nun ein Benutzer eine persönliche Anmerkung zu einem Leistungsmerkmal oder zu einer Bedienungsfunktion des Telefonendgerätes abspeichern, so kann durch eine Betätigung einer vorgegebenen Tastenkombination ein entsprechendes Eingabefeld 14 auf der Anzeige 2 geöffnet werden. Dies wird von der ersten Recheneinheit 5 ausgeführt. Über die Tastatur 16 gibt nun ein Benutzer in das Eingabefeld 14 einen persönlichen Kommentar ein. Je nach Ausführungsform wird der persönliche Kommentar nach Drücken der Rautetaste automatisch der Hilfeinformation zugeordnet, die gerade vom Benutzer aktiviert ist. Die Zuordnung erfolgt in der Weise, dass der persönliche Kommentar von der ersten Recheneinheit 5 zu der zweiten Recheneinheit 10 übertragen wird und die zweite Recheneinheit 10 den persönlichen Kommentar im zweiten Speicher 11 ablegt. Dabei wird eine Kennung für die Hilfeinformation mit abgelegt, zu der der persönliche Kommentar gehört. So wird eine Relation zwischen einer Hilfeinformation und dem persönlichen Kommentar festgelegt.

In einer besonders vorteilhaften Ausführungsform kann der Benutzer auch unabhängig von der gerade dargestellten Hilfeinformation den persönlichen Kommentar einem Kapitel der Hilfeinformation zuordnen. Dabei wird vom Benutzer das entsprechende Kapitel der Hilfeinformation angegeben, wenn die Hilfeinformation in Kapitel unterteilt ist. Anstelle des Kapitels kann aber auch jede Art der Unterteilung der Hilfeinformation verwendet werden, um die persönliche Eingabe einem Abschnitt oder einem Bereich der Hilfeinformation zuzuordnen. Damit wird eine Relation zwischen der persönlichen Eingabe und einem Bereich der Hilfeinformation festgelegt. Vorzugsweise ist die Hilfetaste 3, mit der die Hilfefunktion aufgerufen werden kann, optisch hervorgehoben. Damit wird ein schnelles und einfaches Auffinden der Hilfefunktion ermöglicht.

In einer weiteren vorteilhaften Ausführungsform überwacht die erste Recheneinheit 5 die Tastatur 16 in Bezug auf Eingaben, die von dem Telefonendgerät 1 nicht ausgeführt werden können und somit Fehleingaben darstellen. Erkennt die erste Recheneinheit 5, dass eine Fehleingabe erfolgt ist, so fragt die erste Recheneinheit 5 bei der zweiten Recheneinheit 10 nach einer Hilfeinformation an, die die entsprechende Fehleingabe betrifft. Die zweite Recheneinheit 10 sucht entsprechend der Fehleingabe nach Hilfeinformationen, die im zweiten Speicher 11 abgelegt sind. Findet die zweite Recheneinheit 10 eine entsprechende Hilfeinformation, so überträgt die zweite Recheneinheit 10 die Hilfeinformation über die Datenleitung 8 an die erste Recheneinheit 5, die diese automatisch über die Anzeigesteuerung 7 auf der Anzeige 2 darstellt. Somit erhält ein Benutzer des Telefonendgerätes bei Fehleingaben automatisch Hilfeinformationen, die die Fehleingabe betreffen.

Eine bevorzugte Darstellung der Hilfeinformationen erfolgt in der Weise, dass die Hilfeinformationen in Auswahlklassen unterteilt sind und beispielsweise in einer bevorzugten Ausführungsform nur eine oder mehrere Auswahlklassen auf der Anzeige 2 dargestellt werden. Durch eine entsprechende Aktivierung der Auswahlklasse werden die der Auswahlklasse zugeordneten Hilfeinformationen auf der Anzeige 2 dargestellt. In entsprechender Weise verwaltet die Telefonanlage 15 die Hilfeinformationen auch nach Auswahlklassen.

In einer bevorzugten Ausführungsform wird als erste anzuzeigende Auswahlklasse die Hilfeinformation dargestellt, die nur schwierig zu bedienende Funktionen des Telefonendgerätes betrifft. Die zweite Auswahlklasse betrifft dann Funktionen des Telefonendgerätes, die schwierig zu bedienen sind, die jedoch selten benutzt werden. Die Festlegung, welche Funktion selten benutzt wird, kann vorab festgelegt werden oder von der ersten Recheneinheit 5 in Abhängigkeit von der Benutzung des Telefonendgerätes 1 erfasst werden. Die erste Recheneinheit 5 überwacht dazu die Eingabe der Tastatur 16 und die Funktionsweise des Telefonendgerätes 1 und ermittelt für die verschiedenen Funktionen und Bedienungsarten des Telefonendgerätes eine Statistik über die Häufigkeit der Benutzung. Die Häufigkeit der Benutzung wird von der ersten Recheneinheit 5 den verschiedenen Hilfeinformationen zugeordnet und an die zweite Recheneinheit 10 übertragen. Die zweite Recheneinheit 10 ordnet entsprechend der ermittelten Häufigkeit die Hilfeinformationen den verschiedenen Auswahlklassen zu. Auf diese Weise ist eine lernende Anpassung der Zuordnung der Hilfeinformationen zu verschiedenen Auswahlklassen möglich. Damit wird eine individuelle Anpassung der Anzeige der Hilfeinformationen erreicht.

In einer weiteren bevorzugten Ausführungsform kann der Benutzer die Hilfeinformationen unterteilt nach Kapiteln oder Funktionen des Telefonendgerätes den verschiedenen Auswahlklassen selbst zuordnen. Damit ist eine persönliche Zusammenstellung der Hilfeinformation nach Auswahlklassen möglich. Somit wird der Bedienungskomfort der Hilfefunktion erhöht.

## Patentansprüche

1. Telefonendgerät (1) mit einer Anzeige (2), mit einer Recheneinheit (5), mit einer Schnittstelle (4) zum Austauschen von Daten mit einer Telefonanlage (15), wobei über die Schnittstelle (4) Daten empfangen und von der Recheneinheit (5) auf der Anzeige (2) angezeigt werden,
**dadurch gekennzeichnet, dass**
die Schnittstelle (4) geeignet ist, um Daten einer Hilfefunktion abzurufen und zu empfangen und
dass die Anzeige (2) geeignet ist, um die Daten der Hilfefunktion darzustellen.

2. Telefonendgerät nach Anspruch 1, **dadurch gekennzeichnet, dass** ein Eingabemittel (16) vorgesehen ist,
dass über das Eingabemittel (16) Ergänzungsdaten eingebbar sind,
dass die eingegebenen Ergänzungsdaten (16) von der Recheneinheit (5) in einem Speicher (5) abgelegt werden.

3. Telefonendgerät nach Anspruch 2, **dadurch gekennzeichnet, dass** die Ergänzungsdaten in Relation zu Informationen der Hilfefunktion abgespeichert werden und
dass bei einer erneuten Darstellung der Hilfeinformationen die mit der Hilfeinformation in Relation stehenden Ergänzungsdaten auf der Anzeige (2) darstellbar sind.

4. Telefonendgerät nach einem der Ansprüche 1 bis 3,
**dadurch gekennzeichnet,**
**dass** das Telefonendgerät (1) eine Hilfetaste (3) aufweist, dass die Hilfetaste vorzugsweise optisch hervorgehoben ist und
**dass** durch eine Betätigung der Hilfetasten Hilfeinformationen über die Schnittstelle (4) abrufbar sind.

5. Telefonendgerät nach einem der Ansprüche 1 bis 4,
**dadurch gekennzeichnet, dass** die Hilfefunktion eine Stichwortsuche in den Hilfeinformationen bereithält.

6. Telefonendgerät nach einem der Ansprüche 1 bis 5,
**dadurch gekennzeichnet, dass** die Hilfefunktion bei Erkennen einer Fehlbedienung automatisch von der Recheneinheit (5) auf der Anzeige (2) darstellbar ist.

7. Telefonendgerät nach Anspruch 6, **dadurch gekennzeichnet,**
**dass** die Recheneinheit (5) eine Bedienung des Telefonendgerätes überwacht,
**dass** die Recheneinheit (5) bei Erkennen einer Fehlbedienung die zur Fehlbedienung gehörenden Informationen der Hilfefunktion über die Schnittstelle (4) abruft und nach Empfang die Hilfeinformation auf der Anzeige (2) darstellt.

8. Telefonendgerät nach einem der Ansprüche 1 bis 7,
**dadurch gekennzeichnet, dass** die Hilfeinformation in Auswahlklassen unterteilt sind.

9. Telefonendgerät nach Anspruch 8, **dadurch gekennzeichnet, dass** durch die Vorgabe einer Auswahlklasse die Hilfeinformationen der ausgewählten Auswahlklasse zur Darstellung auf der Anzeige (2) auswählbar ist.

10. Telefonendgerät nach einem der Ansprüche 8 oder 9,
**dadurch gekennzeichnet, dass** die Auswahlklassen nach Häufigkeit der Benutzung unterteilt darstellbar sind.

11. Telefonanlage (15) mit einer Recheneinheit (10), mit einer Schnittstelle (9) zum Austauschen von Daten mit einem Telefonendgerät (1), mit einem Speicher (11), der mit der Recheneinheit (10) verbunden ist,
**dadurch gekennzeichnet, dass**
in dem Speicher (11) Informationen zur Bedienung des Telefonendgerätes (1) abgespeichert sind,
dass die Informationen nach einer Anfrage über die Schnittstelle (9) an ein Telefonendgerät (1) ausgebbar sind.

12. Telefonanlage nach Anspruch 11, **dadurch gekennzeichnet, dass** in dem Speicher (11) freier Speicherplatz vorhanden ist, dass der freie Speicherplatz mit Ergänzungsdaten über die Schnittstelle (9) von dem Telefonendgerät (1) belegbar ist und
dass die Ergänzungsdaten auf Anfrage über die Schnittstelle (9) an das Telefonendgerät (1) ausgebbar sind.

13. Telefonanlage nach Anspruch 12, **dadurch gekennzeichnet, dass** die Ergänzungsdaten in Relation zu einer Auswahlklasse oder in Relation zu einer Hilfeinformation abspeicherbar sind, und
dass die Ergänzungsdaten bei Aufruf der Auswahlklasse oder der Hilfeinformation über die Schnittstelle (9) ausgebbar sind.

14. Telefonanlage nach einem der Ansprüche 12 oder 13,
**dadurch gekennzeichnet, dass** die Hilfeinformation eine Beschreibung der Funktionsweise und/oder der Leistungsmerkmale des Telefonendgerätes (1) und/oder der Telefonanlage (15) aufweist.

15. Telefonanlage nach einem der Ansprüche 12 bis 14,
**dadurch gekennzeichnet,**
**dass** ein Suchprogramm im Speicher (11) abgespeichert ist, mit dem nach Stichworten in der Hilfeinformation suchbar ist, dass bei Auffinden eines Stichwortes in der Hilfeinformation mindestens der Satz, in dem sich das gefundene Stichwort befindet, über die Schnittstelle (9) ausgebbar ist.

16. Telefonanlage nach einem der Ansprüche 12 bis 15,
**dadurch gekennzeichnet,**
**dass** die Hilfeinformation Querverweise zu anderen Textstellen der Hilfeinformation aufweist,
**dass** über eine Aktivierung eines Querverweises die zum Querverweis gehörende Hilfeinformation über die Schnittstelle (9) ausgebbar ist.

17. Verfahren zum Nutzen einer Hilfefunktion, wobei nach einem Aktivieren der Hilfefunktion die Hilfefunktion Informationen für einen Nutzer eines Telefonendgerätes (1) anbietet,
**dadurch gekennzeichnet, dass**
die der Hilfefunktion zur Verfügung stehende Hilfeinformation durch eine Eingabe von Ergänzungsdaten ergänzbar ist.

18. Verfahren nach Anspruch 17, **dadurch gekennzeichnet, dass** die Ergänzungsdaten entsprechend den Hilfeinformationen verwendet werden.

19. Verfahren nach einem der Ansprüche 17 oder 18, **dadurch gekennzeichnet, dass** die Ergänzungsdaten einer Hilfeinformation zugeordnet werden und bei Anzeige der entsprechenden Hilfeinformation mitangezeigt wird.
